Europäisches Patentamt

European Patent Office

Office européen des brevets

(11) Publication number: **0 273 846**
**A1**

# (12) EUROPEAN PATENT APPLICATION

(21) Application number: **87630003.9**

(22) Date of filing: **02.01.87**

(51) Int. Cl.⁴: **F 02 B 43/00**
**F 01 M 3/00**

(43) Date of publication of application:
**06.07.88 Bulletin 88/27**

(84) Designated Contracting States:
**AT BE CH DE ES FR GB GR IT LI LU NL SE**

(71) Applicant: **Wilson, Robert Stanley**
**8 Clyde Street**
**Fern Tree Gully Victoria (AU)**

**Lynch, William Michael**
**4 Kirrawee Avenue**
**Wantirna South Victoria (AU)**

(72) Inventor: **Wilson, Robert Stanley**
**8 Clyde Street**
**Fern Tree Gully Victoria (AU)**

**Lynch, William Michael**
**4 Kirrawee Avenue**
**Wantirna South Victoria (AU)**

(74) Representative: **Weydert, Robert et al**
**OFFICE DENNEMEYER S.à.r.l. P.O. Box 1502**
**L-1015 Luxembourg (LU)**

(54) Liquified petroleum gas fuelled two stroke engine.

(57) A two-stroke internal combustion engine is fuelled by liquified or compressed natural gas. Lubricating oil, in a solution with liquid petroleum, is atomised in a fuel gas/air stream (7) before entering a combustion chamber.

Fig. 1.

## Description

This invention relates to two stroke internal combustion engines and in particular to such engines fuelled by liquified or compressed fuel gas.

Two stroke or two cycle engines are well known and conventionally use liquid petroleum as a fuel and the moving components in the crankcase are lubricated by oil. Most commonly the oil is premixed with the liquid fuel at a typical ratio of 1 to 50 by weight and is introduced into the combustion chamber via a carburettor. Liquified fuel gas usually comprises propane, butane and other gaseous hydrocarbons and is well known as a fuel for heating and lighting as well as for internal combustion engines. In this specification the term liquified fuel gas refers to combustible gases that are in the gaseous state at ambient temperature and atmospheric pressure, but which under pressure are normally stored in the liquid state. Their source is usually from naturally occurring gas or oil fields. The term fuel gas also includes combustible gases synthetically made or made from the degradation of waste matter. The term also includes generally combustible gases, including hydrogen. In this specification the term compressed fuel gas refers to combustible gases stored under greater than atmospheric pressure. Despite its widespread availability and lower retain price, liquified or compressed fuel gas has hitherto been confined to four stroke internal combustion engines. Previously it has not been found that liquified fuel gas can be satisfactorily used as a fuel for two stroke engines.

Accordingly, this invention provides in its broadest form a stroke internal combustion engine fuelled by liquified or compressed fuel gas. In a further form, the invention provides a two stroke internal combustion engine fuelled by liquified or compressed fuel gas including means for direct oil injection of lubricating oil into the crankcase whereby moving parts in the crank case are lubricated. Known techniques of direct oil lubrication of conventional two stroke engines are applicable to the present invention. In a preferred form means are provided such that lubricating oil is introduced into the engine by first diluting the lubricating oil with a combustible thinning solvent, then atomising the solution in an air petroleum gas stream and then introducing the atomised solution, air and fuel gas into a combustion chamber of the engine.

More preferably the solution is introduced into a bowl of a carburettor and atomisation takes place by the solution being drawn through a main jet by the passage of air and fuel gas.

In a still futher preferred form the combustible thinning solvent is liquid petroleum and the preferred ratios of oil to liquid petroleum is from approximately 1 to 4 to 1 to 20 by weight.

In a preferred embodiment the two stroke engine further comprises a warning means adapted to indicate when the lubricating oil is not being introduced into the engine.

Preferably, the two stroke engine further comprises means adapted to cool the engine with water, and more preferably the means is adapted to introduce cooling water to a housing located about the exhaust manifold.

The compositions of the lubricating oil and liquified or compressed fuel gas are not critical for the working of the invention. Acceptable oils are those suitable for conventional liquid petroleum fuelled two stroke engines and acceptable gases are those suitable for four stroke engines. The nature of the combustible thinning solvent is also non critical, its main function being to reduce the viscosity of the oil to allow transport and atomisation of the solution of the oil in the solvent. It is preferred, however, that the thinning solvent is volatile such that when it enters the combustion chamber it is gasefied and may be combusted in admixture with air and the fuel gas. Known methods exist for adapting liquified or compressed fuel gas fuel to be mixed with air at the appropriate ratio prior to entering the combustion chamber of the engine.

This invention also provides a method of operating a two stroke engine comprising the steps of reducing the viscosity of a lubricating oil by dissolution with a combustible thinning solvent, atomising this solution into a steam of liquified or compressed fuel gas and air and introducing the fuel gas, air and atomised solution into the combustion chamber of the engine.

A preferred embodiment of the present invention is now described by reference to the accompanying drawing.

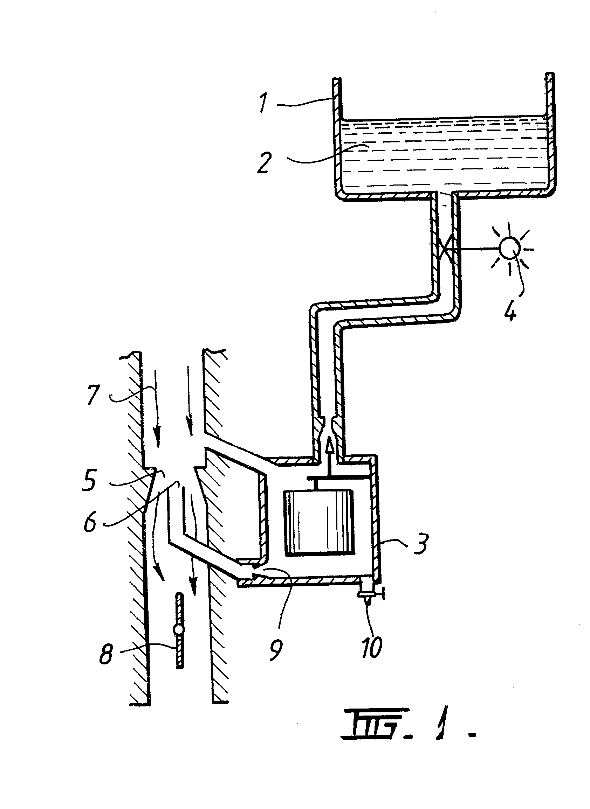

Figure 1 is a schematic representation of a liquified or compressed fuel gas fuel supply arrangement to a two stroke engine.

Referring to the drawing, a reservoir 1 is shown containing a one to eight solution 2 of two-stroke lubricating oil and liquid petroleum. This solution 2 is shown entering a bowl 3 of a carburettor via a low pressure warning device 4. The low pressure warning device 4 senses a reduction in pressure when the reservoir 1 is empty and closes an electrical circuit actuating an audible alarm. It will be appreciated that as a result of the reservoir being empty other warning or fail safe devices could be adapted to prevent the engine being damaged by lack of lubricating oil. For example, an alarm sensor could be located between the bowl 3 and the atomising region 5, and the sensor could be adapted to set off the alarm when the solution in the reservoir was below a predetermined minimum level. The solution 2 is drawn past an outlet orifice 6 of the carburettor and atomised by the passage of a mixture of fuel gas and air 7, the fuel gas being the gaseous form of the liquified or compressed petroleum gas. The solution 2 passes to the orifice 6 via a needle valve 9. The needle valve 9 has bore diameter of 500u with sixteen perpendicularly communicating filter holes, each of 250u bore diameter size. The gas and air are mixed in known way and this is not illustrated nor is the liquified petroleum gas reservoir which is also of conventional configuration. A mixture of gas, air and atomised solution then passes a throttle valve 8 to eventually enter via en entry port the combustion chamber of a two stroke engine (not shown). The two stroke engine is a conventional two stroke engine except that additional cooling capacity is introduced by addition of a housing on the exhaust manifold such that cooling water is introduced into the housing allowing further cooling of the engine. In use as an outboard engine the cooling is provided by pumping water via rotation of the propellor to the housing on the exhaust manifold. This additional cooling has been found useful as two stroke engines operated on liquified or compressed petroleum gases tend to generate more heat than comparable engines using conventional liquid fuels. In operation it has been found that the engine operates more efficiently than when operated with conventional petroleum. It is also noted that less pollution, particularly in the case of boat use, results. It is possible to transfer an engine operating on the fuel gas to conventional petroleum by draining the bowl 3 at tap 10 after stopping supply of solution 2 in reservoir 1 from flowing to the bowl. Needle valve 9 is replaced with a conventional bore, 200u needle valve and a petroleum supply is connected to bowl 3.

01940

## Claims

1. A two stroke internal combustion engine characterised in that it is fuelled by liquified or compressed fuel gas.

2. A two stroke internal combustion engine as defined in Claim 1 characterised by means for direct oil injection of lubricating oil into the crankcase whereby moving parts in the crankcase are lubricated.

3. A two stroke internal combustion engine as defined in Claim 1 characterised in that means are provided such that lubricating oil is introduced into the engine by first diluting the lubricating oil with a combustible thinning solvent then atomising this solution (2) in an air fuel gas stream (7), and then introducing the atomiased solution (2), air and fuel gas into a combustion chamber of the engine.

4. A two stroke internal combustion engine as defined in Claim 3 characterised in that the combustible thinning solvent is liquid petroleum and the solution contains from 5 to 25% by weight lubricating oil.

5. A two stroke internal combustion engine as defined in any one of Claims 3 and 4 characterised in that the engine further comprises a warning means (4) adapted to set off a warning when the lubricating oil is below a predetermined lower limit.

6. A two stroke internal combustion engine as defined in any one of claims 1 to 5 characterised in that additional cooling capacity is provided for the engine.

7. A method of operating a two stroke engine characterised by the steps of forming a solution (2) of lubricating oil and a combustible thinning solvent, atomising this solution (2) into a fuel gas, air stream and introducing the atomised solution (2), fuel gas and air into the combustion chamber of the engine.

8. A two stroke internal combustion engine when used to power an outboard motor arrnagement.

0273846

FIG. 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 740 321 (AUTO UNION)<br>* Page 1, line 1 - page 2, line 106; figure * | 1-4,7 | F 02 B 43/00<br>F 01 M 3/00 |
| Y | | 5,6,8 | |
| | --- | | |
| Y | US-A-4 471 727 (YAMAHA)<br>* Column 3, line 63 - column 4, line 8; figure 1 * | 5,8 | |
| | --- | | |
| Y | US-A-4 306 526 (COOPER)<br>* Column 1, lines 6-22; column 3, lines 9-20; column 5, lines 51-58; figure 1 * | 6,8 | |
| | --- | | |
| X | DE-C- 744 249 (FRAMO-WERKE)<br>* Page 1, line 1 - page 2, line 50; figure * | 1,2 | **TECHNICAL FIELDS SEARCHED (Int. Cl.4)** |
| | --- | | F 02 B<br>F 01 M |
| E | WORLD PATENTS ABSTRACTS, section X, week 8714, 8th January 1987, *X22, no. 87-094075/14*, Derwent Publications Ltd., London, GB; & AU-A-86 59 732 (WILSON) | 1-8 | |
| | ----- | | |

The present search report has been drawn up for all claims

| Place of search | Date of completion of the search | Examiner |
|---|---|---|
| THE HAGUE | 20-08-1987 | KOOIJMAN F.G.M. |